# EUROPÄISCHE PATENTSCHRIFT

(11) **EP 4 066 633 B1**
(45) Veröffentlichungstag und Bekanntmachung des Hinweises auf die Patenterteilung: **05.04.2023**
(21) Anmeldenummer: 22161350.8
(22) Anmeldetag: 10.03.2022
(51) Int. Cl.: A01K 53/00

(54) **FUTTERSTATION ZUR VERSORGUNG VON FLUGINSEKTEN**
FEED STATION FOR FLYING INSECTS
STATION D'ALIMENTATION DESTINÉE À L'ALIMENTATION D'INSECTES VOLANTS

(30) Priorität: 01.04.2021 DE 102021108352
(43) Veröffentlichungstag der Anmeldung: 05.10.2022
(73) Patentinhaber: Denk Keramische Werkstätten e. K., 96450 Coburg (DE)
(72) Erfinder: DENK, Fabian, 96450 Coburg (DE); GALMARINI, Luca, 10081 Castellamonte (TO) (IT)
(74) Vertreter: Engel, Christoph Klaus

(56) Entgegenhaltungen:
- DE-U1- 29 806 000
- US-A- 2 492 468

## Beschreibung

Die Erfindung betrifft eine Futterstation zur Versorgung von Fluginsekten mit Wasser und Futter. Unter Fluginsekten werden hier beispielsweise Bienen, Hummeln, Käfer und Schmetterlinge verstanden. Im Einsatz soll eine solche Futterstation im Außenbereich aufgestellt werden.

Der bereits seit Jahren zu verfolgende Rückgang der Anzahl der Insekten oder sogar das Aussterben ganzer Arten stellt für viele Bereiche eine große Problematik dar. Die Ursachen dafür scheinen vielfältig zu sein und die Wirkungen sind bisher nur teilweise absehbar. Insbesondere bei der Bestäubung von Nutzpflanzen und der damit einhergehenden Ertragssicherung in der Landwirtschaft sind Insekten, insbesondere Bienen, von großer Bedeutung. Die Lebensräume der Insekten werden in durch den Menschen besiedelten Bereichen immer weiter eingeschränkt. Selbst dort, wo kleine Biotope erhalten werden könnten, kommt es z.B. durch das vermehrte Anlegen von sogenannten Steinvorgärten oder die Versiegelung von Bodenflächen zur Zerstörung oder Minderung der Lebensräume der Insekten. Aufgrund dessen gewinnt der Insektenschutz immer mehr an Bedeutung, sodass verschiedene Naturschutzverbände den Insektenschutz fördern und das Bewusstsein der Bevölkerung dahingehend schärfen möchten. Mit dem Verbot Bienen, Wespen, Hornissen und Hummeln zu töten, wurde zwar eine aktive Dezimierung dieser Tiere untersagt, die passive Schädigung der Tiere kann damit aber nicht ausgeglichen werden. Naturschützer schlagen darüber hinaus das Aufstellen von Futterstellen und Tränken vor, um den Insekten ergänzende Nahrung und Wasser bereitzustellen.

Es existiert bereits eine Vielzahl an verschiedenen Futterstellen und Wassertränken, welche im Garten aufgestellt werden können, jedoch sind diese meist für Vögel konzipiert. Auch werden flache Schalen, befüllt mit Wasser, aufgestellt.

Die WO 2019/186214 A1 beschreibt eine Tränke, bestehend aus einer Schale für die Zufuhr von flüssigem Futter und einem Rahmen für die Bereitstellung von Futter in fester Form. Im Inneren des Rahmens ist ein kleiner Futtertrog angeordnet, um Bienen mit Sirup zu versorgen, wenn der Imker dies für erforderlich hält. Der Futtertrog hat einen Deckel mit einem Sieb, um das Futter vor äußeren Einflüssen zu schützen.

In der DE 20 2020 101 805 U1 ist eine Insektentränke beschrieben, welche einen mit Wasser oder Nährflüssigkeit gefüllten, trichterförmigen Grundkörper aufweist, in welchem ein durch einen Stopfen geführtes Röhrchen angeordnet ist, wobei der Stopfen die Öffnung des Grundkörpers verschließt. Auf dem Stopfen ist ein Teller angeordnet, welcher einen Durchlass für das Röhrchen aufweist. Auf den Teller wird ein Schwämmchen aufgebracht, welcher die Öffnung des Röhrchens verdeckt und somit die in dem Grundkörper befindliche Flüssigkeit durch das Röhrchen aufsaugen kann. Diese Insektentränken hat jedoch den Nachteil, dass sie mit nur einer Flüssigkeit befüllt werden kann. Ein weiterer Nachteil ergibt sich daraus, dass bei starker Hitze und Sonneneinstrahlung das Wasser am Schwamm sehr schnell verdunstet. Außerdem besteht die Gefahr, dass insbesondere Ameisen von der Nährflüssigkeit angezogen werden, die den Schwamm ohne weiteres Erreichen können.

US 2 492 468 A und DE 298 06 000 U1 offenbaren weitere Bienenfütterungsstationen der oben genannten Art.

Die Aufgabe der Erfindung besteht darin, eine verbesserte Futterstation für Fluginsekten bereitzustellen, welche gleichzeitig als Futter- und Wasserstelle für Fluginsekten dienen kann. Dabei sollen Wasser und Futter weitgehend vor dem konkurrierenden Zugriff anderer Tiere geschützt sein.

Die genannte Aufgabe wird durch eine Futterstation zur Versorgung von Fluginsekten gemäß dem beigefügten Anspruch 1 gelöst.

Die Futterstation dient der Versorgung gezielt von Fluginsekten. Sie umfasst dazu einen zentral liegenden Fluidfutterbereich, einen Trockenfutterbereich und eine Wasserrinne, wobei diese drei Bereiche einstückig aus einem keramischen Material geformt sind. Der Fluidfutterbereich dient zur Aufnahme von Fluidfutter, beispielsweise in Form von Zuckerwasser, Sirup, Honig oder dergleichen, und weist mehrere Erhöhungen auf, welche etwa 1-5mm über die Bodenfläche des Fluidfutterbereichs hinausragen. Die Erhöhungen haben bevorzugt einen Durchmesser von 1-5 mm und dienen als Landeplatz für die Fluginsekten. Der Fluidfutterbereich wird vom Benutzer nur soweit mit Fluidfutter gefüllt, dass die Erhöhungen aus dem Fluidfutter herausragen, sodass sich Fluginsekten darauf niederlassen und Nahrung aufnehmen können, ohne im Fluidfutter kleben zu bleiben.

Der Trockenfutterbereich besitzt eine Auflagefläche, auf welcher Trockenfutter abgelegt werden kann, beispielsweise Obststücke, Pflanzensamen oder sonstiges Festfutter, sodass Fluginsekten, die derartiges Futter bevorzugen, dort Nahrung aufnehmen können. Der Trockenfutterbereich umgibt den Fluidfutterbereich, um diesen zu begrenzen und das Auslaufen des Fluidfutters aus diesem Bereich zu verhindern. Die Bodenfläche des Fluidfutterbereichs verläuft dafür in einer gegenüber der Auflagefläche des Trockenfutterbereichs tiefer liegenden Ebene, wenn sich die Futterstation in der im wesentlichen horizontal ausgerichteten Benutzungslage befindet.

Die Wasserrinne dient zur Aufnahme von Wasser, sodass den Fluginsekten ausreichend Flüssigkeit bei Hitze zu Verfügung steht. Die Wasserrinne weist eine innere Wandung auf, welche an den Trockenfutterbereich angrenzt, und eine äußere Wandung, welche die äußere Begrenzung der Futterstation bildet. Die Grundlinie der Wasserrinne verläuft in einer gegenüber der Auflagefläche des Trockenfutterbereichs tiefer liegenden Ebene und bevorzugt auch tiefer liegend gegenüber der Bodenfläche des Fluidfutterbereichs. Die Wasserrinne erfüllt den weiteren Zweck, beide Futterbereiche vor dem Zugriff von flugunfähigen Insekten zu schützen, insbesondere von Ameisen, welche die durch das Wasser gebildete Barriere nicht überwinden können. Die Wasserrinne besitzt bevorzugt eine Breite von 2 bis 6 cm und eine Tiefe von 1 bis 3 cm.

Bevorzugt beschreibt die äußere Wandung der Futterstation einen Kreis, eine Ellipse oder ein Vieleck, wobei die Ecken des Vielecks abgerundet ausgebildet sein können. In einer besonders bevorzugten Ausführungsform ist die Grundfläche kreisförmig ausgebildet und die einzelnen Bereiche sind konzentrische zueinander angeordnet. In diesem Fall kann der innenliegende Fluidbereich vorzugsweise einen Durchmesser von 7 bis 9 cm, der mittig liegende Trockenfutterbereich einen äußeren Durchmesser von 14 bis 16 cm, die außen liegende Wasserrinne einen Außendurchmesser von 25 bis 28 cm aufweisen.

Bevorzugt ergibt sich zwischen der Auflagefläche des Trockenfutterbereichs und der Bodenfläche des Fluidfutterbereichs eine Höhendifferenz h von 0,5 bis 1,5 cm, sodass der Trockenfutterbereich eine stufenartige Erhöhung gegenüber dem Fluidfutterbereich darstellt. Dies dient zur Begrenzung des Fluidfutterbereichs und der Gewährleistung, dass das innerhalb des Fluidfutterbereichs angeordnete Fluidfutter nicht in den Trockenfutterbereich eindringt.

Besonders bevorzugt weist die innere Wandung der Wasserrinne eine flachere Steigung auf als die äußere Wandung der Wasserrinne. die innere Wandung der Wasserrinne verläuft gegenüber der Auflagefläche des Trockenfutterbereichs somit in einem spitzen Winkel. Die steilere äußere Wandung der Wasserrinne erschwert es nicht-flugfähigen Insekten zusätzlich, überhaupt in die Futterstation einzudringen. Besonders bevorzugt ist die Außenseite der äußeren Wandung tellerförmig gebildet, sodass eine Art Überhang entsteht. Sofern ein nicht-flugfähiges Insekt es dennoch schafft, bis zu der mit Wasser gefüllten Wasserrinne vorzudringen, kann es diese nicht überqueren, sodass die im Trockenfutterbereich und im Fluidfutterbereich befindliche Nahrung nicht von flugunfähigen Insekten erreicht werden kann.

Eine vorteilhafte Ausführungsform zeichnet sich dadurch aus, dass die gesamte Futterstation einstückig aus einem keramischen Material geformt ist, vorzugsweise aus einer sogenannten Granit-Keramik, bei welcher der Rohmasse feinkörniges Granitmehl beigemischt wird. Die gesinterte Keramik ist dicht gebrannt, chemisch inert, bietet Bakterien und Gerüchen kaum Angriffsflächen und kann einfach gereinigt werden, beispielsweise mit einer Seifenlösung oder bei besonderen Anforderungen mit schwachen Säuren und Laugen. Durch Herstellung in Ausformtechnik oder Gießtechnik kann die Materialstärke der Keramik relativ dünn und damit die Futterstation insgesamt leicht gehalten werden. Das keramische Material gestattet es, dass die Futterstation ganzjährig im Außenbereich aufgestellt werden kann, da eine hohe Wetterbeständigkeit gegeben ist. Im Einsatz bietet das keramische Material den weiteren Vorteil, dass leichte Sonneneinstrahlung relativ schnell zur Erwärmung der Futterstation führt, was für die Fluginsekten angenehm ist, dass eine insgesamt hohe Wärmekapazität gegeben ist, sodass die Futterstation auch in den Abendstunden längere Zeit angenehm temperiert bleibt, und dass eine Überhitzung auch bei starker Sonneneinstrahlung weitgehend vermieden wird.

Besonders bevorzugt besteht die Futterstation aus einer nichtglasierten Keramik, deren Keramikrohmasse im Herstellungsprozess Titanoxid beigemischt wurde. Dadurch wird eine bakterizide Oberfläche erzeugt. Das derart ausgerüstete Material ist chemisch inert und lebensmittelgeeignet. An der Oberfläche des Keramikscherbens bilden sich beim Brand über 800°C Anatas- und Rutil-Pigmente als Variationen von Titanoxid. Diese Pigmente sind fotokatalytisch wirksam. Bei Lichtbeaufschlagung in Verbindung mit Luftsauerstoff und Luftfeuchtigkeit bilden sich freie reaktive Hydroxi- und Peroxi-Radikale. Diese freien Radikale reagieren mit ortsnahen organischen Verbindungen (wie z.B. Bakterien) und zerstören sie. Vorzugsweise wird der Keramikrohmasse ca. 2% Titandioxid beigemischt, womit sich ein funktionaler, mikroskopisch sichtbarer Oberflächeneffekt durch Rutil- und Anatas-Pigmente einstellt. Die Pigmente sind in der Keramik gebunden und können nicht abgelöst bzw. ausgeschwemmt werden. Durch diese Maßnahme wirkt die verwendete Keramik bakterizid und erhöht damit die maximale Lagerdauer des Futters im Nass- und Trockenfutterbereich. Durch Aufstellen der Futterstation im Freien wird die Beaufschlagung mit Licht sichergestellt, um die erwähnte Fotokatalyse in Gang zu halten. Ein Vorteil der genutzten Keramik ist die Wasserdichtigkeit und Frostfestigkeit, sodass ein Aufstellen das ganze Jahr über möglich ist. Ein weiterer Vorteil ist, dass das Material sich in der Sonne schnell aufheizen kann, jedoch bei direkter Sonneneinstrahlung nicht überhitzt.

In einer bevorzugten Ausführungsform kann innerhalb des Fluidfutterbereichs ein in Fluidfutter getränkter Zelluloseschwamm angeordnet werden. Zum einen dient der Schwamm aufgrund seiner vorzugsweise gelben Färbung in Verbindung mit der grauen Färbung des keramischen Materials als Lockmittel und zum anderen erleichtert der Zelluloseschwamm aufgrund seiner Poren die Nahrungsaufnahme insbesondere für Schmetterlinge. Auf diese Weise kann das Fluidfutter insbesondere für diese Insektenart angeboten werden. Der Zelluloseschwamm ist bei Verschleiß austauschbar und bevorzugt biologisch abbaubar.

Gemäß einer abgewandelten Ausführungsform weist die Bodenfläche des Fluidfutterbereichs eine erste Färbung, insbesondere eine gelbe oder orangene Färbung auf. Bevorzugt , weist die Auflagefläche des Trockenfutterbereichs eine zweite Färbung auf, insbesondere eine blaue oder grüne Färbung. Diese Farbgestaltung wirkt auf die Insekten, aufgrund deren besonderer optischer Farbempfindlichkeit, wie ein Blütenkelch und lockt sie zur Nahrungsaufnahme an.

Das Anlocken durch den gelben Zelluloseschwamm als auch durch die Blaufärbung ergibt einen weiteren Vorteil. Die Futterstation kann im Freien beispielsweise in einem Bereich des Gartens aufgestellt werden, welcher von Aufenthaltsbereichen oder von einem Gartentisch entfernt ist. Dadurch, dass Bienen, Wespen, Hornissen und ander von der Futterstation angelockt werden, zeigen sie kein Interesse mehr für die menschliche Nahrung auf dem Gartentisch, sodass die Garten-Benutzer beim Essen im Garten nicht oder deutliche weniger von Insekten gestört werden. Somit entfällt auch das Aufstellen von Lockmitteln für Bienen und andere Insekten, die deren Tod zur Folge haben. Die Futterstation dient damit in doppeltem Sinne dem Artenschutz.

Bevorzugt weißt die Unterseite der Futterstation eine oder mehrere Aussparungen auf, in welcher Halteelemente eines Ständers oder einer Aufhängung anbringbar sind. Somit ergeben sich unterschiedliche Anwendungsgebiete, ob auf dem Boden, erhöht auf einem Ständer oder mittels Aufhängung, sodass lediglich Fluginsekten die Futterstation überhaupt erreichen können.

Weitere Vorteile, Einzelheiten und Weiterbildungen der Erfindung ergeben sich aus der nachfolgenden Beschreibung einer bevorzugten Ausführungsform, unter Bezugnahme auf die Zeichnung. Es zeigen:
- Fig. 1: eine Draufsicht auf eine erfindungsgemäße Futterstation;
- Fig. 2: einen Querschnitt der Futterstation gemäß Fig. 1.

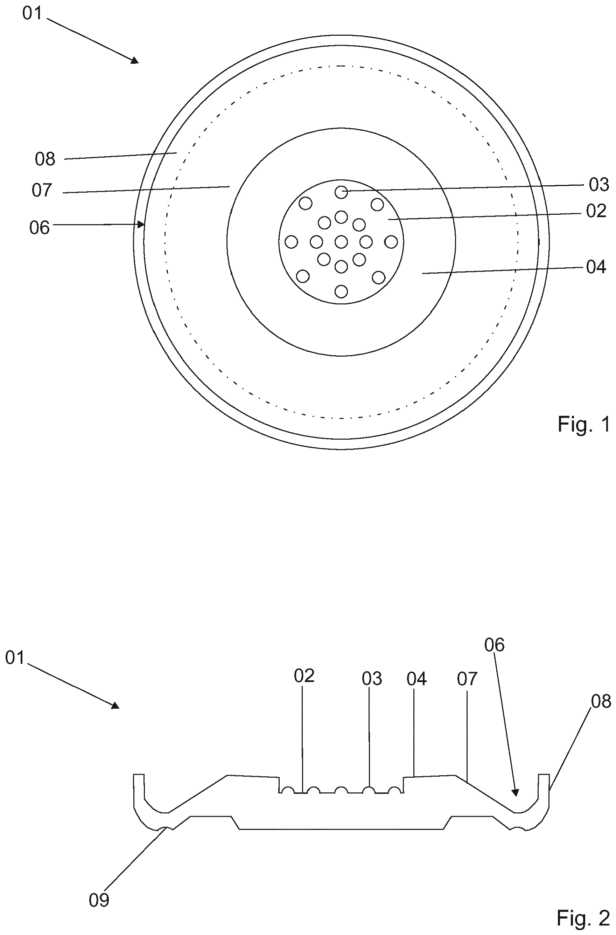

Fig. 1 zeigt eine bevorzugte Ausführungsform einer erfindungsgemäße Futterstation 01 für Fluginsekten in einer Draufsicht, während Fig. 2 einen Querschnitt zeigt. Nachfolgend wird diese Ausführungsform unter gleichzeitiger Bezugnahme auf beide Figuren beschrieben.

Die Futterstation 01 ist im wesentlichen tellerförmig gestaltet und besitzt beispielsweise einen Außendurchmesser von 24 bis 28 cm und eine Gesamthöhe von 3 bis 5 cm. Die Futterstation weist einen kreisförmigen zentralen, topfförmig abgesenkten Fluidfutterbereich 02 auf, beispielsweise mit einem Durchmesser von 7,5 bis 8,5 cm und einer Tiefe von 0,5 bis 1,5 cm. Im Fluidfutterbereich 02 sind mehrere kreisförmige Erhöhungen 03 angeordnet. Die Erhöhungen können unregelmäßig oder gleichmäßig auf der Bodenfläche des Fluidfutterbereichs verteilt sein und eine Höhe von 1 bis 5 mm, vorzugsweise etwa 2 bis 3 mm, sowie einen Durchmesser von 0,5 bis 1 cm aufweisen.

Der Fluidfutterbereich 02 ist von einem umrandenden und begrenzenden ringförmigen Trockenfutterbereich 04 umgeben. Der Trockenfutterbereich 04 ist bei der kreisförmigen Gestaltung somit konzentrisch zum Fluidfutterbereich 02 angeordnet. Eine Auflagefläche des Trockenfutterbereichs 04 befindet sich etwa von 0,5 bis 1,5 cm oberhalb der Bodenfläche des Fluidfutterbereichs 02. Die Auflagefläche liegt etwa in derselben Ebene wie die Außenkante der Futterstation. Besonders bevorzugt besitzt die Auflagefläche eine schwache Neigung hin zum Fluidfutterbereich, sodass eventuell abrutschende Trockenfutterbestandteile nach innen in den Fluidfutterbereich rutschen. Alternativ ist die Neigung der Auflagefläche stattdessen nach Außen gerichtet, insbesondere wenn es bevorzugt ist, dass Regenwasser nach außen zu einer umgebenden Wasserrinne 06 abläuft.

An den Trockenfutterbereich 04 grenzt die ringförmige Wasserrinne 06 an, die ebenfalls konzentrisch zum Fluidfutterbereich 02 verläuft. Die Wasserrinne 06 besitzt eine innere Wandung 07, welche an den Trockenfutterbereich 04 angrenzt, und eine äußere Wandung 08, welche die äußere Begrenzung der Futterstation 01 bildet. Dabei weist die innere Wandung 07 einen vergleichsweise flachen Anstieg von einer Bodenlinie der Wasserrinne 06 zum angrenzenden Trockenfutterbereich 04 auf. Auf dem Trockenfutterbereich landende Fluginsekten können daher auf der inneren Wandung 07 an das Wasser gelangen, unabhängig vom Wasserstand in der Wasserrinne 06. Die äußere Wandung 08 ist hingegen steil ausgebildet und verläuft im wesentlichen senkrecht zur Haupterstreckungsebene der Futterstation, sodass sie eine wirksame Barrieren für flugunfähige Insekten bildet.

Auf der Unterseite der Futterstation 01 ist eine ringförmige Aussparung 09 ausgebildet, welche als Aufnahme für Halteelemente eines Ständers oder einer Aufhängung dient.

### Bezugszeichenliste

- 01: Futterstation
- 02: Fluidfutterbereich
- 03: Erhöhungen
- 04: Trockenfutterbereich
- 05: --
- 06: Wasserrinne
- 07: innere Wandung
- 08: äußere Wandung
- 09: Aussparung

## Patentansprüche

1. Futterstation (01) zur Versorgung von Fluginsekten, umfassend:
- einen zentral liegenden Fluidfutterbereich (02) zur Aufnahme von Fluidfutter, welcher mehrere Erhöhungen (03) aufweist, die 1-5mm über eine Bodenfläche des Fluidfutterbereichs (02) hinausragen;
- einen Trockenfutterbereich (04) mit einer Auflagefläche zur Platzierung von Trockenfutter, wobei der Trockenfutterbereich (04) den Fluidfutterbereich (02) umgibt, wobei die Bodenfläche des Fluidfutterbereichs (02) in einer gegenüber der Auflagefläche des Trockenfutterbereichs (04) tiefer liegenden Ebene verläuft;
- eine Wasserrinne (06) zur Aufnahme von Wasser, die den Trockenfutterbereich (04) umgibt, wobei eine innere Wandung (07) der Wasserrinne (06) an den Trockenfutterbereich (04) angrenzt und eine äußere Wandung (08) der Wasserrinne (06) die äußere Begrenzung der Futterstation (01) bildet, wobei die Grundlinie der Wasserrinne (06) in einer gegenüber der Auflagefläche des Trockenfutterbereichs (04) tiefer liegenden Ebene verläuft;
wobei der Fluidfutterbereich (02), der Trockenfutterbereich (04) und die Wasserrinne (06) einstückig aus einem keramischen Material geformt sind.

2. Futterstation (01) nach Anspruch 1, **dadurch gekennzeichnet, dass** die äußere Wandung (08) der Wasserrinne (06) einen Kreis, eine Ellipse oder ein Vieleck beschreibt.

3. Futterstation (01) nach Anspruch 1 oder 2, **dadurch gekennzeichnet, dass** die Grundlinie der Wasserrinne (06) in einer gegenüber der Bodenfläche des Fluidfutterbereichs (02) tiefer liegenden Ebene verläuft.

4. Futterstation (01) nach einem der Ansprüche 1 bis 3,
**dadurch gekennzeichnet, dass** die innere Wandung (07) der Wasserrinne (06) gegenüber der Auflagefläche des Trockenfutterbereichs (04) in einem spitzen Winkel verläuft.

5. Futterstation (01) nach einem der Ansprüche 1 bis 4,
**dadurch gekennzeichnet, dass** die äußere Wandung (08) der Wasserrinne (06) im wesentlichen senkrecht zur Auflagefläche des Trockenfutterbereichs (04) steht.

6. Futterstation (01) nach einem der Ansprüche 1 bis 5,
**dadurch gekennzeichnet, dass** das keramische Material eine nicht-glasierte Granit-Keramik ist, wobei der Keramikrohmasse Titandioxid beigemischt wurde.

7. Futterstation (01) nach einem der Ansprüche 1 bis 6,
**dadurch gekennzeichnet, dass** sie einen Zelluloseschwamm umfasst, der innerhalb des Fluidfutterbereichs (02) positionierbar ist, zur temporären Speicherung des Fluidfutters.

8. Futterstation (01) nach einem der Ansprüche 1 bis 7,
**dadurch gekennzeichnet, dass** die Bodenfläche des Fluidfutterbereichs (02) eine erste Färbung aufweist, die von der Grundfarbe der Futterstation abweicht, insbesondere gelb oder orange gefärbt ist.

9. Futterstation (01) nach einem der Ansprüche 1 bis 8,
**dadurch gekennzeichnet, dass** die Auflagefläche des Trockenfutterbereichs (04) eine zweite Färbung aufweist, die von der Grundfarbe der Futterstation abweicht, insbesondere blau oder grün gefärbt ist.

10. Futterstation (01) nach einem der Ansprüche 1 bis 9,
**dadurch gekennzeichnet, dass** an der Unterseite der Futterstation (01) eine Aussparung (09) angeordnet ist, in welcher Halteelemente eines Ständers oder einer Aufhängung anbringbar sind.

## Claims

1. A feed station (01) for feeding flying insects, comprising:
- a central fluid feed region (02) for receiving fluid feed, said region having multiple elevations (03) which protrude 1 - 5 mm from a base surface of the fluid feed region (02);
- a dry feed region (04) having a rest surface for placing dry feed, the dry feed region (04) surrounding the fluid feed region (02), the base surface of the fluid feed region (02) running in a lower plane than the rest surface of the dry feed region (04);
- a water channel (06) for receiving water, said channel surrounding the dry feed region (04), an inner wall (07) of the water channel (06) being adjacent to the dry feed region (04), and an outer wall (08) of the water channel (06) forming the outer boundary of the feed station (01), the base line of the water channel (06) running in a lower plane than the rest surface of the dry feed region (04) ;
wherein the fluid feed region (02), the dry feed region (04) and the water channel (06) are formed integrally from a ceramic material.

2. The feed station (01) according to Claim 1, **characterised in that** the outer wall (08) of the water channel (06) describes a circle, an ellipse or a polygon.

3. The feed station (01) according to Claim 1 or 2, **characterised in that** the base line of the water channel (06) runs in a lower plane than the base surface of the fluid feed region (02).

4. The feed station (01) according to any one of Claims 1 to 3, **characterised in that** the inner wall (07) of the water channel (06) runs at an acute angle relative to the rest surface of the dry feed region (04).

5. The feed station (01) according to any one of Claims 1 to 4, **characterised in that** the outer wall (08) of the water channel (06) is substantially perpendicular to the rest surface of the dry feed region (04).

6. The feed station (01) according to any one of Claims 1 to 5, **characterised in that** the ceramic material is an unglazed granite ceramic, wherein titanium dioxide has been mixed into the raw ceramic mixture.

7. The feed station (01) according to any one of Claims 1 to 6, **characterised in that** it comprises a cellulose sponge which can be positioned inside the fluid feed region (02) to store the fluid feed temporarily.

8. The feed station (01) according to any one of Claims 1 to 7, **characterised in that** the base surface of the fluid feed region (02) has a first colour which is different from the main colour of the feed station and is in particular yellow or orange.

9. The feed station (01) according to any one of Claims 1 to 8, **characterised in that** the rest surface of the dry feed region (04) has a second colour which is different from the main colour of the feed station and is in particular blue or green.

10. The feed station (01) according to any one of Claims 1 to 9, **characterised in that** there is a recess (09) in the underside of the feed station (01), in which recess holding elements of a stand or suspension can be attached.

## Revendications

1. Poste d'alimentation (01), destiné à alimenter des insectes volants, comprenant :
- une zone d'alimentation fluide (02), à emplacement central, destinée à recevoir un aliment fluide, laquelle comporte plusieurs élévations (03), qui saillissent de la valeur de 1 à 5 mm au-delà d'une surface de fond inférieur de la zone d'alimentation fluide (02) ;
- une zone d'alimentation sèche (04), pourvue d'une surface portante, pour y placer de l'aliment sec, la zone d'alimentation sèche (04) entourant la zone d'alimentation fluide (02), la surface de fond inférieur de la zone d'alimentation fluide (02) s'écoulant dans un plan disposé en contrebas par rapport à la surface portante de la zone d'alimentation sèche (04) ;
- une rigole (06), destinée à recevoir de l'eau, qui entoure la zone d'alimentation sèche (04), une paroi (07) interne de la rigole (06) étant adjacente à la zone d'alimentation sèche (04) et une paroi (08) externe de la rigole (06) créant la délimitation extérieure du poste d'alimentation (01), la ligne de base de la rigole (06) s'écoulant dans un plan disposé en contrebas par rapport à la surface portante de la zone d'alimentation sèche (04) ;
la zone d'alimentation fluide (02), la zone d'alimentation sèche (04) et la rigole (06) étant façonnées en monobloc en une matière céramique.

2. Poste d'alimentation (01) selon la revendication 1, **caractérisé en ce que** la paroi (08) externe de la rigole (06) décrit un cercle, une ellipse ou un polygone.

3. Poste d'alimentation (01) selon la revendication 1 ou 2, **caractérisé en ce que** la ligne de base de la rigole (06) s'écoule dans un plan s'écoulant en contrebas par rapport à la surface de fond inférieur de la zone d'alimentation (02).

4. Poste d'alimentation (01) selon l'une quelconque des revendications 1 à 3, **caractérisé en ce que** la paroi interne (07) de la rigole (06) s'écoule sous un angle aigu par rapport à la surface portante de la zone d'alimentation sèche (04).

5. Poste d'alimentation (01) selon l'une quelconque des revendications 1 à 4, **caractérisé en ce que** la paroi externe (08) de la rigole (06) est sensiblement perpendiculaire à la surface portante de la zone d'alimentation sèche (04).

6. Poste d'alimentation (01) selon l'une quelconque des revendications 1 à 5, **caractérisé en ce que** la matière céramique est une céramique de granit non émaillée, à la masse brute de céramique ayant été mélangé du dioxyde de titane.

7. Poste d'alimentation (01) selon l'une quelconque des revendications 1 à 6, **caractérisé en ce qu'**il comprend une éponge en cellulose, qui est positionnable à l'intérieur de la zone d'alimentation fluide (02), pour accumuler temporairement l'aliment fluide.

8. Poste d'alimentation (01) selon l'une quelconque des revendications 1 à 7, **caractérisé en ce que** la surface de fond inférieur de la zone d'alimentation (02) présente une première teinte, qui est différente de la couleur de base du poste d'alimentation, notamment **en ce qu'**elle est teintée en jaune ou en orange.

9. Poste d'alimentation (01) selon l'une quelconque des revendications 1 à 8, **caractérisé en ce que** la surface portante de la zone d'alimentation sèche (04) présente une deuxième teinte, qui est différente de la couleur de base du poste d'alimentation, notamment **en ce qu'**elle est teintée en bleu ou en vert.

10. Poste d'alimentation (01) selon l'une quelconque des revendications 1 à 9, **caractérisé en ce que** sur la face inférieure du poste d'alimentation (01) est placée une encoche (09) dans laquelle peuvent être montés des éléments de maintien d'un support ou d'une suspension.
